# FASCICULE DE BREVET EUROPEEN

(11) **EP 1 693 284 B1**
(45) Date de publication et mention de la délivrance du brevet: **30.07.2008**
(21) Numéro de dépôt: 06300151.5
(22) Date de dépôt: 20.02.2006
(51) Int. Cl.: B62D 25/14, B62D 21/11, B62D 21/15, B62D 25/00

(54) **Agencement de tablier, pour véhicule automobile**
Stirnwandanordnung für Kraftfahrzeug
Firewall arrangement for vehicle

(30) Priorité: 21.02.2005 FR 0550469
(43) Date de publication de la demande: 23.08.2006
(73) Titulaire: RENAULT S.A.S., 92100 Boulogne Billancourt (FR)
(72) Inventeur: Juventin, Anne Claire, 29000, Quimper (FR); Vivero, François, 78150, Le Chesnay (FR)

(56) Documents cités:
- EP-A- 1 184 262
- US-A1- 2002 175 538
- US-B1- 6 299 237

## Description

La présente invention concerne un agencement de tablier pour véhicule automobile, comprenant un tablier disposé transversalement pour séparer une première partie de soubassement d'une deuxième partie de soubassement, ce tablier étant fixé au moins sur une traverse supérieure et une traverse inférieure, les extrémités des traverses inférieure et supérieure étant soudées dans des structures d'accueil solidaires de la caisse du véhicule.

Ce type d'agencement prend par exemple place entre le soubassement central et le soubassement avant. Selon le type de véhicule produit, et la largeur du véhicule correspondant, la dimension transversale du tablier doit être modifiée. De façon classique, les traverses supérieure, inférieure, et les différents moyens supports permettant la fixation de ces traverses sur la caisse du véhicule doivent être modifiées. A ce sujet, voir par exemple le document US 2002/0175538 qui couvre le préambule de la revendication 1.

L'objectif de l'invention est donc de proposer une structure de tablier permettant une grande modularité selon les dimensions des véhicules dans lesquels cette structure doit être implantée.

En réponse à des objectifs que l'on retrouve invariablement chez les différents constructeurs automobiles, la présente invention se veut également peu coûteuse et peu encombrante.

Pour répondre à ces objectifs, l'invention propose un agencement tel que décrit précédemment, caractérisé en ce que les structures d'accueil présentent des dimensions aptes à permettre le coulissement respectif des traverses inférieure et supérieure préalablement à leur immobilisation dans leur structure d'accueil respective.

Selon différentes caractéristiques de la présente invention :
- la traverse inférieure présente des extrémités de longueur et de section déterminées, et en ce que chaque structure d'accueil présente une section correspondante, apte à coopérer avec une extrémité de la traverse inférieure, et une longueur supérieure à la longueur des extrémités, de sorte que chaque extrémité de la traverse puisse être positionné à différents endroits de la structure d'accueil avant d'être soudée dans cette structure d'accueil.
- la traverse inférieure présente des extrémités sensiblement rectilignes et de section rectangulaire, et une partie centrale bombée, de manière à permettre le passage d'organes fonctionnels du véhicule.
- chaque structure d'accueil est formée d'une feuillure munie d'un bord relevé contre lequel la traverse inférieure peut coulisser avant d'être soudée.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique vue de l'arrière du soubassement avant et du soubassement central d'un véhicule intégrant une structure avant selon l'invention ;
- la figure 2 est une représentation schématique conforme à la figure 1, dépouillée du soubassement central et de l'extrémité de la structure avant;

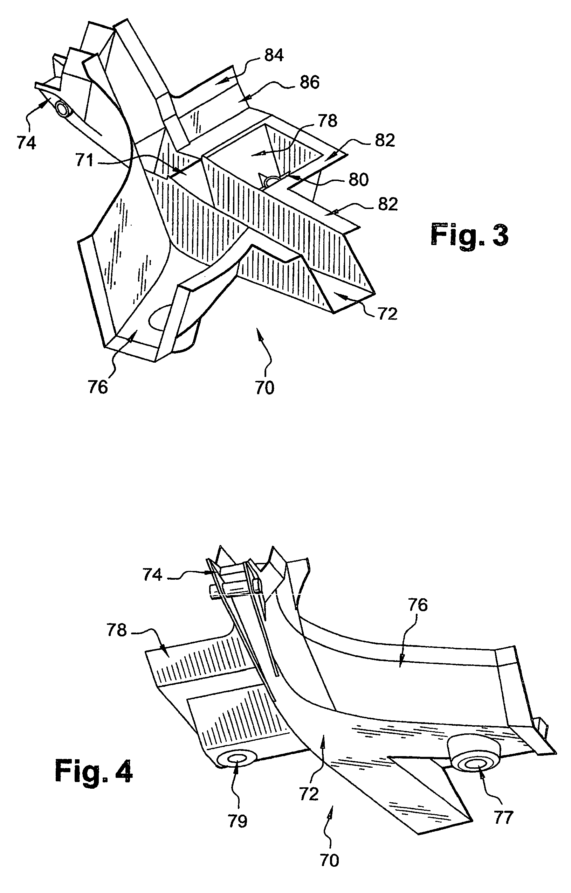

- la figure 3 est une représentation en perspective d'un moyen de jonction selon l'invention, vue de dessus;
- la figure 4 est une représentation en perspective du moyen de la figure 3, vue de dessous.

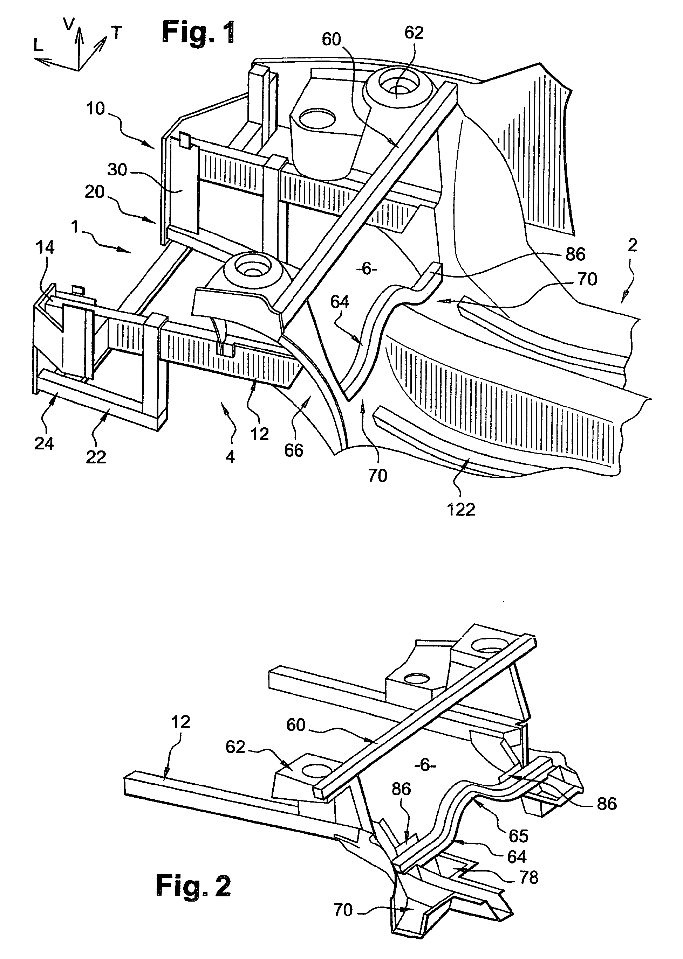

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Tel que représenté sur les figures, un véhicule automobile comprend au moins un soubassement central 2, qui correspond à la structure située sous l'habitacle, et un soubassement avant 4, qui forme la structure avant sous capot. Un tablier 6, porté par le soubassement avant 4, sépare l'habitacle de la structure avant sous capot.

La structure avant 1 du véhicule doit encaisser la totalité des efforts lors d'un choc frontal et une partie des efforts lors d'un choc latéral. La structure doit être résistante et doit pouvoir absorber un maximum d'efforts. A cet effet, la structure avant 1 comporte deux voies d'absorption d'efforts, une voie haute 10 formée essentiellement de deux longerons 12 reliés respectivement à leur extrémité avant 14 par une traverse 16, et une voie basse formée 20 d'un berceau qui porte les bras de suspension non représenté et qui est prolongé vers l'avant par un cadre additionnel 22, de sorte que l'extrémité avant 24 de ce cadre 22 soit situé sensiblement sous l'extrémité avant 14 des longerons 12.

La voie haute 10 comportant les longerons 12 forme classiquement la partie principale d'absorption d'énergie lors des chocs. Les longerons 12 sont ainsi dimensionnés pour encaisser un maximum d'efforts lors d'un choc violent, et la traverse 16 est dimensionnée pour encaisser l'ensemble des efforts lors d'un petit choc, afin que les longerons 12 ne soient pas impactés.

Le rôle premier de la voie basse 20 est de permettre la suspension et la protection du bloc moteur, par la combinaison d'un berceau et d'un cadre additionnel 22. Dans un souci constant d'apporter un maximum de sécurité aux occupants du véhicule, une partie de l'énergie créée lors d'un choc est dirigée vers cette voie basse 20 pour que celle-ci puisse l'absorber. A cet effet, une pendeloque 30 est disposée à l'avant du véhicule, entre l'extrémité avant 14 de chaque longeron 12 de la voie haute 10 et l'extrémité avant associée 24 du cadre additionnel 22. Cette pendeloque 30 a pour effet de répartir les efforts entre les deux voies d'absorption 10 et 20.

Un tablier 6, porté par le soubassement avant 4, sépare l'habitacle de la structure avant sous capot. Ce tablier est délimité par une traverse supérieure de tablier 60, reprise latéralement au niveau des profilés de coupelle de suspension 62, par une traverse inférieure de tablier 64 et latéralement par les passages de roue 66.

La traverse inférieure de tablier 64 est, selon l'invention, reprise latéralement par des moyens de jonction 70 assurant principalement la continuité du passage d'efforts entre les longerons 12 de la structure avant 1 et les longerons 122 formant le soubassement central 2. Un moyen de jonction 70 est formé d'une pièce monobloc, avantageusement une pièce de fonderie en aluminium. Ce moyen de jonction 70 permet ainsi de transmettre au mieux les efforts vers les longerons 122 formant le soubassement central 2 et vers le bavolet disposé à l'extrémité latérale du véhicule, en présentant un poids minimum et un montage simplifié du fait du nombre limité d'éléments.

Tel que représenté sur les figures, le moyen de jonction 70 comporte principalement une voie d'efforts 72 sensiblement longitudinal, qui présente une forme « en U » ouvert sur le dessus, aux extrémités duquel sont montés d'une part un longeron 122 formant soubassement central 2 et d'autre part un longeron 12 de la structure avant 1. Du fait de l'architecture de ces deux longerons et de leur disposition verticale l'un par rapport à l'autre, la partie avant de la voie d'efforts 72 présente une surface inclinée montante par rapport à la partie arrière de cette voie d'efforts 70, de sorte que le longeron 122 formant le soubassement central 2, sensiblement plat, puisse être accueilli dans la partie arrière de la voie d'efforts 70, et que le longeron 12 formant la structure avant 1, dont l'extrémité arrière est inclinée en direction du niveau du soubassement central, puisse être accueilli dans la partie avant de la voie d'efforts 70. Deux nervures 74 sont situées sous la partie avant de la voie d'efforts 70, pour rigidifier cette zone et permettre l'intégration d'une fixation haute du berceau.

Le moyen de jonction 70 est formé également d'un élément de jonction latéral 76, qui s'étend latéralement depuis la voie d'efforts 70 vers l'extérieur du véhicule, et qui présente également une forme « en U » ouvert sur le dessus. L'extrémité, opposée à la voie d'efforts, de cet élément de jonction latéral est liée à un bavolet, non représenté et qui forme l'élément structurel de la partie basse du côté de caisse. Une partie des efforts absorbés pendant le choc est ainsi dirigée vers les éléments de structure latéraux. De plus, un tel agencement permet d'augmenter la raideur en flexion de l'ensemble du bloc avant. L'élément de jonction latéral 76 du moyen de jonction 70 prolonge la partie avant de la voie d'efforts 72 par une face courbe qui épouse la forme du passage de roue 66. Un trou de pilotage 77 est aménagé dans le fond de l'élément de jonction latéral 76, et permet de s'indexer à un référentiel qui est commun pour l'ensemble des opérations, à titre d'exemple les opérations de peinture, d'assemblage et de montage, lors du processus de fabrication du véhicule.

Un élément de jonction central 78, situé de l'autre côté de la voie d'efforts 70 par rapport à l'élément de jonction latéral 76, présente une forme sensiblement carrée et creuse. Le fond de cet élément creux présente un trou 79 apte à permettre la fixation arrière du berceau sur le moyen de jonction 70. Ce trou 79 est muni d'au moins une nervure 80 reprise sur les parois de l'élément creux 78 pour permettre de rigidifier la moyen de jonction 70 au niveau de cette fixation du berceau, source de vibration. Les pourtours de cet élément creux de jonction central 78 sont formés de feuillures 82 pour permettre la mise en place du plancher au dessus de cet élément de jonction central 78. Une de ces feuillures 82 présente un bord relevé 84 et forme ainsi une structure d'accueil 86 pour la traverse basse de tablier 64. Cette traverse 64 peut coulisser dans la structure d'accueil 86 de chaque moyen de jonction 70, et elle est ensuite soudée sur cette structure d'accueil 86 lorsque le positionnement est bon.

Des nervures 71 sont disposées dans la voie d'efforts 70, sensiblement au niveau du noeud structurel formé par l'élément de jonction latéral 76, l'élément de jonction central 78 et la voie d'efforts 70. Ces nervures 71 permettent à la fois de rigidifier l'ensemble du moyen de jonction 70, et de favoriser la dispersion des efforts vers les côtés du véhicule pour optimiser le niveau d'absorption général.

Comme vu précédemment, la traverse basse de tablier 64 peut coulisser dans les structures d'accueil 86 aménagées dans chaque moyen de jonction 70. De plus, la traverse haute de tablier 60 est reçue de façon analogue dans les coupelles d'amortisseur 62 de sorte qu'elle peut également coulisser et être ensuite soudée. Il est donc obtenu, par la combinaison de ces deux libertés de translation, une structure amovible du tablier 6. Des véhicules aux largeurs différentes peuvent ainsi être équipés des mêmes moyens de jonction 70, la dimension des traverses haute et basse de tablier étant les seules à varier. La traverse supérieure de tablier 64 peut ainsi présenter, telle que représentée à la figure 2, des extrémités sensiblement rectilignes, aptes à coopérer avec les structures d'accueil des moyens de jonction, et une partie centrale bombée 65 qui permet le passage d'organes fonctionnels du véhicule, comme par exemple des éléments de direction. Il sera compris qu'un véhicule de grandes dimensions pourra être équipé de deux moyens de jonctions 70 et d'une traverse basse de tablier 64 telle que décrite ci-dessus, pendant qu'un véhicule de petites dimensions sera équipé des mêmes moyens de jonctions 70 et de la même traverse basse 64, la longueur des extrémités étant diminuée. Les dimensions de la traverse haute de tablier 60 étant également modulables pour venir reposer dans les structures d'accueil des coupelles d'amortisseur 62 quel que soit le véhicule, on obtient un ensemble supportant le tablier 6 qui peut être reproduit sur chaque véhicule d'une gamme, seules la dimension du tablier 6 et les extrémités de la traverse haute 60 et de la traverse basse 64 de tablier étant modifiées, tandis que les moyens de jonction 70, les coupelles d'amortisseur 62 et les structures d'accueil correspondantes sont reproduites à l'identique.

L'invention n'est nullement limitée au mode de réalisation décrit et illustré qui n'a été donné qu'à titre d'exemple.

## Revendications

1. Agencement de tablier pour véhicule automobile, comprenant un tablier (6) disposé transversalement pour séparer une première partie (2) de soubassement d'une deuxième partie (4) de soubassement, ce tablier (6) étant fixé au moins sur une traverse supérieure (60) et une traverse inférieure (64), les extrémités des traverses inférieure (64) et supérieure (60) étant soudées dans des structures d'accueil (86) solidaires de la caisse du véhicule, **caractérisé en ce que** les structures d'accueil (86) présentent des dimensions aptes à permettre le coulissement respectif des traverses inférieure (64) et supérieure (60) préalablement à leur immobilisation dans leur structure d'accueil respective (86).

2. Agencement selon la revendication 1, **caractérisé en ce que** la traverse inférieure (64) présente des extrémités de longueur et de section déterminées, et **en ce que** chaque structure d'accueil (86) présente une section correspondante, apte à coopérer avec une extrémité de la traverse inférieure (64), et une longueur supérieure à la longueur des extrémités, de sorte que chaque extrémité de la traverse (64) puisse être positionné à différents endroits de la structure d'accueil (86) avant d'être soudée dans cette structure d'accueil.

3. Agencement de montage selon la revendication 1 ou 2, **caractérisé en ce que** la traverse inférieure (64) présente des extrémités sensiblement rectilignes et de section rectangulaire, et une partie centrale bombée (65), de manière à permettre le passage d'organes fonctionnels du véhicule.

4. Agencement de montage selon la revendication 3, **caractérisé en ce que** chaque structure d'accueil (86) est formée d'une feuillure (82) munie d'un bord relevé (84) contre lequel la traverse inférieure (64) peut coulisser avant d'être soudée.

## Claims

1. Motor vehicle bulkhead arrangement comprising a bulkhead (6) arranged transversely so as to separate a first subframe part (2) from a second subframe part (4), this bulkhead (6) being fastened at least to an upper crossmember (60) and a lower crossmember (64), the ends of the lower (64) and upper (60) crossmembers being welded into receiving structures (86) secured to the vehicle body, **characterized in that** the receiving structures (86) have dimensions designed to allow the respective sliding movement of the lower (64) and upper (60) crossmembers prior to their immobilization in their respective receiving structure (86).

2. Arrangement according to Claim 1, **characterized in that** the lower crossmember (64) has ends with a defined length and cross section, and **in that** each receiving structure (86) has a corresponding cross section, designed to cooperate with one end of the lower crossmember (64), and a length which is greater than the length of the ends, such that each end of the crossmember (64) can be positioned at different points on the receiving structure (86) before being welded into this receiving structure.

3. Mounting arrangement according to Claim 1 or 2, **characterized in that** the lower crossmember (64) has substantially rectilinear ends of rectangular cross section and a convex central part (65) so as to allow the passage of functional components of the vehicle.

4. Mounting arrangement according to Claim 3, **characterized in that** each receiving structure (86) is formed by a rebate (82) provided with a raised edge (84) against which the lower crossmember (64) can slide before being welded.

## Patentansprüche

1. Stirnwandanordnung für ein Kraftfahrzeug, umfassend eine Stirnwand (6), die quer angeordnet ist, um einen ersten Unterbauteil (2) von einem zweiten Unterbauteil (4) zu trennen, wobei diese Stirnwand (6) mindestens auf einer oberen Querstrebe (60) und einer unteren Querstrebe (64) befestigt ist, wobei die Enden der unteren (64) und oberen Querstreben (60) in Aufnahmestrukturen (86) geschweißt sind, die mit dem Karosseriegehäuse des Fahrzeugs verbunden sind, **dadurch gekennzeichnet, dass** die Aufnahmestrukturen (86) Abmessungen aufweisen, die geeignet sind, das jeweilige Gleiten der unteren (64) und oberen Querstrebe (60) vor ihrer Feststellung in ihrer jeweiligen Aufnahmestruktur (86) zu ermöglichen.

2. Anordnung nach Anspruch 1, **dadurch gekennzeichnet, dass** die untere Querstrebe (64) Enden mit bestimmter Länge und Querschnitt aufweist, und dass jede Aufnahmestruktur (86) einen entsprechenden Querschnitt, der mit einem Ende der unteren Querstrebe (64) zusammenwirken kann, und eine größere Länge als die Länge der Enden aufweist, so dass jedes Ende der Querstrebe (64) an verschiedenen Stellen der Aufnahmestruktur (86) positioniert werden kann, bevor es in diese Aufnahmestruktur geschweißt wird.

3. Montageanordnung nach Anspruch 1 oder 2, **dadurch gekennzeichnet, dass** die untere Querstrebe (64) im Wesentlichen gerade Enden mit rechteckigem Querschnitt und einen gewölbten Mittelteil (65) aufweist, um den Durchgang von Funktionselementen des Fahrzeugs zu ermöglichen.

4. Montageanordnung nach Anspruch 3, **dadurch gekennzeichnet, dass** jede Aufnahmestruktur (86) von einem Falz (82) gebildet ist, der mit einem überhöhten Rand (84) versehen ist, an dem die untere Querstrebe (64) gleiten kann, bevor sie angeschweißt wird.
